# EUROPEAN PATENT SPECIFICATION

(11) **EP 1 318 047 B1**
(45) Date of publication and mention of the grant of the patent: **07.03.2007**
(21) Application number: 02258246.4
(22) Date of filing: 29.11.2002
(51) Int. Cl.: B60R 11/02

(54) **In-vehicle printing system**
Drucksystem in einem Kraftfahrzeug
Système d'impression dans un véhicule

(30) Priority: 10.12.2001 US 16256
(43) Date of publication of application: 11.06.2003
(73) Proprietor: Hewlett-Packard Company, Palo Alto, CA 94304 (US)
(72) Inventor: Aquilina, Rene Charles, Fort Collins, CO 80527 (US)
(74) Representative: Powell, Stephen David

(56) References cited:
- FR-A- 2 779 695
- US-A- 5 516 191
- US-A- 5 966 285
- PATENT ABSTRACTS OF JAPAN vol. 1998, no. 05, 30 April 1998 (1998-04-30) & JP 10 023230 A (BROTHER IND LTD), 23 January 1998 (1998-01-23)
- PATENT ABSTRACTS OF JAPAN vol. 2002, no. 03, 3 April 2002 (2002-04-03) & JP 2001 328310 A (CANON INC), 27 November 2001 (2001-11-27)
- PATENT ABSTRACTS OF JAPAN vol. 1995, no. 06, 31 July 1995 (1995-07-31) & JP 07 064673 A (OKI ELECTRIC IND CO LTD), 10 March 1995 (1995-03-10)
- PATENT ABSTRACTS OF JAPAN vol. 015, no. 444 (E-1132), 12 November 1991 (1991-11-12) & JP 03 188752 A (NIPPONDENSO CO LTD), 16 August 1991 (1991-08-16)
- PATENT ABSTRACTS OF JAPAN vol. 2002, no. 03, 3 April 2002 (2002-04-03) & JP 2001 328309 A (CANON INC), 27 November 2001 (2001-11-27)

## Description

This invention relates to a printer embedded in a vehicle to facilitate a variety of printing applications such as telematics system support and on-site printing from a portable personal computer.

Vehicle telematics systems, which combine with telecommunications equipment with on-board and remote computers to facilitate operation and use of a vehicle, are gaining in popularity. One known type of vehicle telematics system uses an in-vehicle computer, a global positioning satellite (GPS) transceiver, and a wireless communication system for automatic roadside assistance and remote vehicle locating and diagnostics. Such vehicle telematics systems are commercially available. For example, the OnStar Corporation of Troy, Michigan, which is a wholly-owned subsidiary of the General Motors Corporation, sells such a system under the trademark ONSTAR.

Most of the communication between the passenger and the existing telematics system is transmitted audibly, usually using a microphone in the vehicle and the speakers of the vehicle's sound system. In practice, this audible-only form of communication is inefficient and time consuming for performing some functions For example, if a vehicle occupant would like directions to a particular location, they activate the telematics system to contact a remote fixed center, usually through a wireless communication system component of the telematics system, such as a cell phone. An operator receives the call from the vehicle along with appropriate positioning information from the vehicle through the GPS technology component of the telematics system. The operator then compares the location of the vehicle with the desired location of the driver and then provides the driving directions to the vehicle occupant by speaking to the occupant over the cell phone. The occupant then must remember each step of the directions, or write them down as they are audibly provided to him by the operator. Accordingly, the vehicle occupant often forgets the provided directions, or worse when the vehicle occupant is the driver, he may be distracted while driving by attempting to write down the information provided by the operator.

In addition to the current features offered by vehicle telematics systems, new generation vehicle telematics systems are being developed that allow vehicle occupants to maintain further contact with their fixed computing and communication systems while on the road. For example, these new generation vehicle telematics systems will allow vehicle occupants to send and receive email and browse a world wide computing network, such as the Internet, while traveling in the vehicle. However, the current audio - only form of communication between the vehicle occupants and the telematics system, severely limits the usefulness of these additional features. For example, few vehicle occupants would welcome having a remote operator read the vehicle occupant's personal email to them over the cell phone component of the telematics system. Similarly, information found by the vehicle occupant while searching a worldwide computing network is difficult to retrieve and comprehend using only audio input.

To date, printer use in vehicles has focused primarily on making the printers portable to support laptop computer operations. For example, U.S. Patent No. 6,273,310 to Gregory discloses a portable arm rest-type console for receiving a laptop computer and printer therein. The console is designed so that a driver can operate the laptop computer, and print materials from the computer as needed while driving. The console itself is detachably secured to the vehicle and occupies at least one seat in the vehicle. The printer is slidably received within the console such that to operate the printer, the user must open an access door in the console and slide the printer over the front, right passenger seat of the vehicle. The console also includes carrying straps for moving the console from place to place. Similar structures are disclosed in U.S. Patent No. 5,966,285 to Demtchouk and U.S. Patent No. 6,135,546, both of which provide removable computer workstations that rest on vehicle seats.

These types of detachable computer workstations have several limitations. For example, they are bulky, heavy, and relatively expensive. They also occupy at least one seat in the vehicle, thereby reducing the seating capacity of the vehicle, and they do not improve the communication between the vehicle's occupants and the vehicle's telematics system.

The above known use of printers in vehicles does not provide an in-vehicle printing system that provides an in-vehicle mounted printer operably connected to a host-computing device, such as the vehicle's telematics system or a personal computer; nor does it provide a printer which is secured within the vehicle such that it does not reduce the available seating capacity of the vehicle and is concealed when not in use.

JP 2001 328310 A discloses a printer which is located beneath a front seat of a vehicle and which an be used by a person sitting in a back seat of the vehicle. The disclosure of this document corresponds generally to the preamble of claim 1.

According to a first aspect of the present invention, there is provided an in-vehicle printer comprising a printer operably connected to a host device, said host device commanding the printer, and a vehicle having a passenger seat therein, said passenger seat having a passenger seating area, a seat, back, and a chamber for receiving said printer, said printer being operably secured within said chamber such that said printer does not occupy any portion of said seating area, characterised in that said chamber is located within said seat back.

According to a second aspect of the present invention, there is provided a method for displaying information from a telematics system, the telematics system able to wirelessly transmit information from a remote location to a vehicle, the vehicle having a passenger compartment with a plurality of passenger seats therein, each said passenger seat having a seating area, said method for displaying information comprising the steps of: securing a printer within a chamber located within a seat back of one of said passenger seats such that the seating area of each passenger seat within the vehicle is not blocked by any portion of the printer; operably connecting the telematics system to the printer; receiving information through the telematics system; printing the information on a print medium operably secured to the in-vehicle printer.

Embodiments of the present invention provide an n-vehicle printing system that provides a printer operably secured and concealed within an existing component of the vehicle, viz the back of the front passenger seat. The printer is preferably in communication with the vehicle's telematics system.
FIG. 1 is a partial, isometric view of a vehicle having a seat therein containing a printer in accordance with an embodiment of the present invention.
FIG. 2 is an isometric view of the printer of FIG. 1.
FIG. 3 is an enlarged back, plan view of the vehicle seat of FIG. 1.
FIG. 4 is a side view of the seat of FIG. 2 showing a possible orientation of the printer therein.
FIG. 5 is a side view of the seat of FIG. 2 showing an alternative possible orientation of the printer.
FIG. 6 is a block diagram of an in -vehicle printing system in accordance with an embodiment of the present invention.

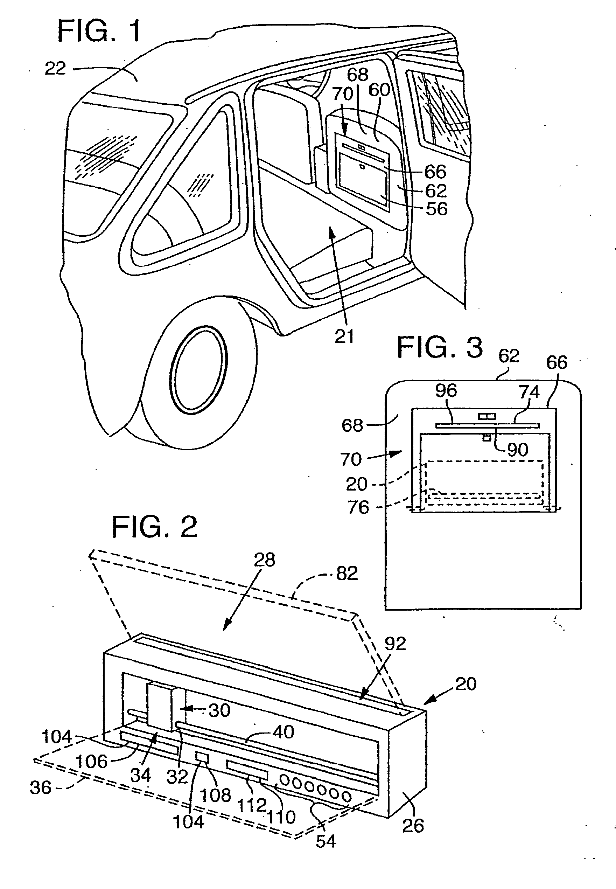

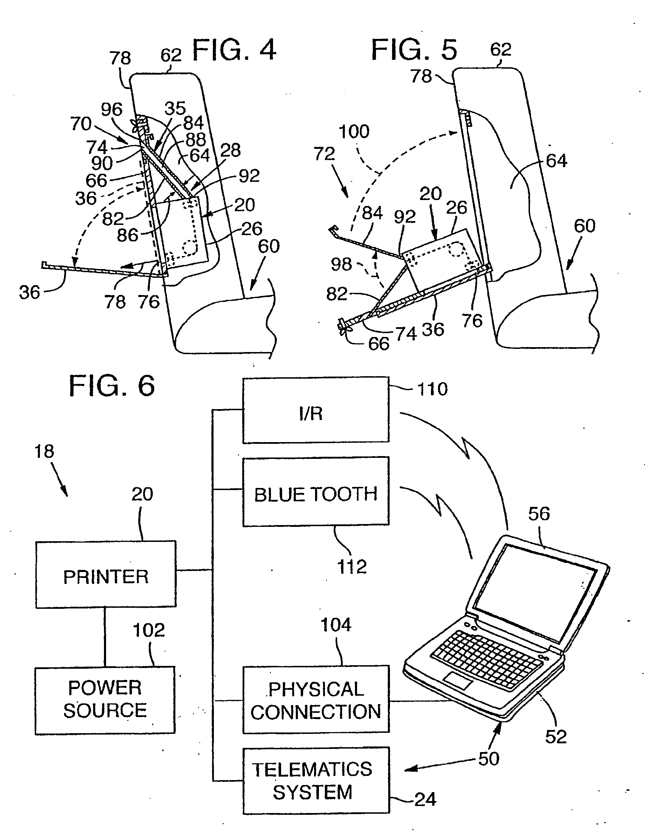

An in-vehicle printing system 18 (FIG. 6) having a printer 20 operably secured in a vehicle 22 and operably connected to the vehicle's telematics system 24 and/or a personal computer 52 is disclosed in FIGS. 1-6.

### A. Printer Assembly

The printer 20 is preferably a conventional printer that has been adapted for installation in the vehicle. One known type of printer 20 having the overall dimensions to be readily secured within a vehicle as described is an inkjet printer manufactured and sold by the Hewlett-Packard Corporation of Palo Alto, California under the trademark HP DESKJET 350C. The inkjet printer 20, shown in FIG. 2, includes a chassis 26, a print medium handling system 28 for supplying sheets of print media to the printer 20, and a movable print carriage 30 for moving one or more printheads 32 relative to the print medium at a print zone 34. The print media may be any type of suitable sheet material, such as paper, card-stock, transparencies, mylar, foils, and the like, but for convenience, the illustrated embodiment is described using paper as the print medium. The print medium handling system 28 moves the print media into the print zone 34 from a feed tray 35 to an output tray 36, for instance, using a series of conventional motor-driven rollers (not shown).

In the print zone 34, the media sheets receive ink from a printhead 32. Each printhead 32 has bottom surface comprising an orifice plate with a plurality of nozzles formed therethrough in a manner well known to those skilled in the art. The illustrated printhead s 32 are thermal inkjet printheads, although other types of printheads may be used, such as piezoelectric printheads. The printheads 32 typically include a plurality of resistors that are associated with the nozzles. Upon energizing a selected resistor, a bubble of gas is formed ejecting a droplet of ink from the nozzle and onto a sheet of paper in the print zone 34 under the nozzle.

The printheads 32 are transported by the carriage 30, which maybe driven by a conventional drive belt/pulley and motor arrangement (not shown) along a guide rod 40. The guide rod 40 defines a scanning direction or scanning axis along which the printheads 32 traverse over the print zone 34. The printheads 32 selectively deposit one or more ink droplets on a print media page located in the print zone 34 in accordance with instructions received via a conductor strip from a printer controller (not shown), such as a microprocessor which may be located within chassis 26. The controller may receive an instruction signal from a host device 50 (FIG. 6), which is typically a computer, such as a personal computer 52. Preferably, the host device 50 also includes the vehicle's telematics system 24.

The printhead 38 carriage motor (not shown) and the print medium handling system 28 drive motor (not shown) operate in response to the printer controller, which may operate in a manner well known to those skilled in the art. The printer controller may also operate in response to user inputs provided through a keypad 54 (FIG. 2). A monitor 56 coupled to the host computer may be used to display visual information to an operator, such as the printer status or a particular program being run on the computer. Personal computers, their input devices, such as a keyboard and/or a mouse device, and monitors are all well known to those skilled in the art.

### B. Printer Mounting

The printer 20 is secured within the passenger compartment 21 of the vehicle 22 such that it does not reduce the available seating capacity of the vehicle 22 and it is concealed when not in use. More preferably, the printer 20 is positioned in the vehicle so as not to distract the driver of the vehicle 22 while driving.

Accordingly, a particularly desirable location for mounting the printer is within a passenger seat 60. As best shown in FIGS. 1, and 3-5, the printer 20 is mounted in the seat back 62 of the front passenger seat 60 of the vehicle 22 so that the printed material is expelled from the back 68 of the front passenger seat 60.

The seat back 62 includes a chamber 64 sized to receive the printer 20 and feed tray 35. The chamber 64 includes a latchable, access door 66 that is preferably pivotally secured to the passenger seat 60 thereby defining a closed position 70 shown in FIGS. 1, 3, and 4, and an open position 72 shown in FIG. 5. As best shown in FIG. 1, all available seats in the vehicle are available and unblocked when the access door 66 is in its closed position 70.

The back 68 of the passenger seat 60 includes an inlet slot 74 for receiving paper into the feed tray 35, and an exit slot 76 for allowing printed paper to be expelled from the chamber 64 after passing through the printer 20. With the access door 66 in its closed position 70, a paper path is defined by arrows 78 such that sheets of paper travel through the inlet slot 74 to the feed tray 35, where it then travels through the printer 20 and out the exit slot 76.

The output tray 36 is preferably secured to the access door 66, adjacent to the exit slot 76 for compiling and neatly storing printed paper expelled through the exit slot 76 from the printer 20. More preferably, this output tray 36 is pivotally secured to the access door 66 such that it may pivot out of the way when not in use as shown in broken lines in FIG. 4.

Preferably, the printer 20 is operably secured to the access door 66 such that the internal printer components are easily accessible when the access door 66 is in its open position 72 as shown in FIG. 5. Alternatively, the printer 20 may be secured to the passenger seat 60 within the chamber 64, with access to the printer components being provided by separate access door (not shown) in the chassis 26. Vibration isolators (not shown) preferably extend between the printer 20 and chamber to help isolate the printer 20 from vibrations while the vehicle 22 travels.

Similarly, the feed tray 35 is preferably easily accessible when the access door 66 is in its open position 72, thereby allowing paper jams and like in the feed tray 35 to be easily cleared. One known way to provide an easy access feed tray 35 is shown in FIGS. 4 and 5. As best shown in FIG. 4, the feed tray 35 preferably includes a forward panel 82 and a rearward panel 84 that are spaced apart from each other and aligned substantially parallel with each other when the access door 66 is placed in its closed position 70. The distance 86 between the two panels 82, 84 defines a storage area 88 for receiving a stack of sheets of paper, said sheets being fed one at a time to the printer 20 using known technology.

The forward panel 82 extends from the lower lip 90 of the inlet slot 74 in the access door 66 to the inlet portion 92 of the printer. When the access door 66 is in its closed position 70, the rearward panel 84 extends from the upper lip 96 of the inlet slot 74 in the access door 66 to the inlet portion 92 of the printer 20 as shown in FIG. 4. The rearward panel 84 is preferably pivotally secured to the printer 20 and biased to a position away from the access door 66 such that when the access door is in its open position 72, the rearward panel 84 pivots away from the forward panel 82 in the direction of arrow 98 (FIG. 5) thereby providing easy access to the feed tray 35. It can be appreciated by one skilled in the art, that moving the access door 66 to its closed position 70 urges the rearward panel 84 of the feed tray 35 in the direction of arrow 100 (Fig. 5) to contact the passenger seat 60 as shown, thereby ultimately positioning the forward and rearward panels 82, 84 substantially parallel with each other as shown in FIG. 4 and defining the feed tray 35 as previously described.

### C. Printer Communication

FIG. 6 shows an exemplar block diagram of the printer 20 being connected to a plurality of host devices 50 including a personal computer 52 and the vehicle's telematics system 24.

Preferably, the printer 20 is in electrical communication with an existing power source 102 on the vehicle 22, such as the vehicles' battery or electrical system. The preferred location of the printer 20 in the front passenger seat 60 allows the printer 20 to be easily connected to an existing power source 102, such as power lines typically running to the passenger seat 60 to power electrical seat movement actuators (not shown) or seat heaters (not shown) imbedded within the passenger seat 60.

The vehicle's telematics system 24 is known in the art. One known type of vehicle telematics system uses automobile systems, a global positioning satellite (GPS) technology, and other wireless communication systems for automatic roadside assistance and remote vehicle locating and diagnostics. One known functioning vehicle telematics system is sold by the OnStar Corporation of Troy, Michigan under the trademark ONSTAR.

Placing the printer 20 in communication with the vehicle's telematics system 24 allows a variety of information to be printed for the vehicle occupant's convenience. For example, vehicle occupants can receive facsimile transmission, print pages of information displayed on a world-wide network, such as the Internet, and print their e-mail while traveling in the vehicle. Similarly, current information provided by the vehicle telematics system 24, such as driving directions, reservation numbers, and the like, may now be sent by a remote operator to the printer 20, thereby allowing the vehicle occupants to print out and read this information more efficiently than attempting to remember it or write it down while driving. Moreover, as the variety of information available to vehicle occupants through vehicle telematics systems increases, the printer 20 will facilitate vehicle occupant's access to and retention of this information.

Preferably, the printer also includes at least one port 104 to detachably secure an auxiliary computing device, such as a personal computer 52, handheld computer (not shown), digital camera (not shown), scanner (not shown), or the like. This port 104 can be a physical connection, such as a printer jack 106 or Universal Serial Bus ("USB") 108 port, or it can be a wireless port, such as a conventional infrared port 110 or other wireless technology 112, such as the wireless technology currently sold by a variety of manufacturers under the collective trade name BLUE TOOTH. In such case, the auxiliary computer device would include appropriately compatible wireless transmitters and receivers to communicate through the corresponding wireless port connected to the printer 20. In addition, the location of these components within the vehicle can be optimized for the particular auxiliary computing device. For example, the wireless receive can be located within the vehicle dashboard or the like to facilitate connection of an auxiliary computer device while being held by a vehicle occupant in the front seats of the vehicle. Accordingly, the on-board printer can also be used as a conventional printer to support conventional personal computing, scanning, and digital photograph printing operations.

### E. Alternative Embodiments

Even though the foregoing description has focused on the installation and operation of an inkjet printer, it can be appreciated that the basic concepts of this invention will work equally well with any other type of printer and associated print-medium installed in the vehicle. Similarly, there need not be a physical connection between the vehicle's telematics system and the printer. Appropriate wireless communications, such as the disclosed infrared (IR) and BLUE TOOTH technologies, could be applied to transmit information between the printer and vehicle telematics system.

Thus, having here described preferred embodiments of the present invention, it is anticipated that other modifications may be made thereto within the scope of the invention by individuals skilled in the art. Thus, although preferred and alternative embodiments of the present invention have been described, it will be appreciated that the scope of the invention is not limited to those embodiments, but extend to the various modifications and equivalents as defined in the appended claims.

## Claims

1. An in-vehicle printer comprising a printer (20) operably connected to a host device (50), said host device (50) commanding the printer (20), and a vehicle (22) having a passenger seat (60) therein, said passenger seat (60) having a passenger seating area, a seat back (62), and a chamber (64) for receiving said printer (20), said printer (20) being operably secured within said chamber (64) such that said printer (20) does not occupy any portion of said seating area, **characterised in that** said chamber (64) is located within said seat back (62).

2. The in-vehicle printer of claim 1, wherein said host device (50) is a vehicle telematics system (24).

3. The in-vehicle printer of claim 1, wherein said host device (50) is a portable computer (52).

4. The in-vehicle printer of any preceding claim, wherein said seat back (62) includes an inlet slot (74) and an exit slot (76) and a print medium may be inserted through said inlet slot (74) such that said print medium travels through said inlet slot (74) to said printer (20), and from said printer (20) through said exit slot (76).

5. The in-vehicle printer of any preceding claim, wherein said passenger seat (60) has a back side (68) and said chamber (64) is accessible through an access door (66) on said back side (68), said access door (66) being pivotably secured to said seat back (62) to define a closed position (70) and an open position (72).

6. The in-vehicle printer of claim 5, further including a feed tray (35) extending between said access door (66) and said printer (20) when said access door (66) is in said closed position (70).

7. A method for displaying information from a telematics system (24), the telematics system (24) able to wirelessly transmit information from a remote location to a vehicle (22), the vehicle (22) having a passenger compartment with a plurality of passenger seats (60) therein, each said passenger seat (60) having a seating area, said method for displaying information comprising the steps of:
securing a printer (20) within a chamber (64) located within a seat back (62) of one of said passenger seats (60) such that the seating area of each passenger seat within the vehicle is not blocked by any portion of the printer (20);
operably connecting the telematics system (24) to the printer (20);
receiving information through the telematics system (24);
printing the information on a print medium operably secured to the in-vehicle printer (20).

8. The method for displaying information in a vehicle of claim 7, further including the step of operably connecting an auxiliary host device (50) to the printer (20).

## Patentansprüche

1. Ein fahrzeuginterner Drucker, der einen Drucker (20) aufweist, der wirksam mit einer Hostvorrichtung (50) verbunden ist, wobei die Hostvorrichtung (50) den Drucker (20) anweist, und ein Fahrzeug (22), das einen Passagiersitz (60) darin aufweist, wobei der Passagiersitz (60) einen Passagiersitzbereich, eine Sitzrückenlehne (62) und eine Kammer (64) zum Aufnehmen des Druckers (20) aufweist, wobei der Drucker (20) wirksam in der Kammer (64) befestigt ist, derart, dass der Drucker (20) keinen Teil des Sitzbereichs belegt, **dadurch gekennzeichnet, dass** die Kammer (64) in der Sitzrückenlehne (62) angeordnet ist.

2. Der fahrzeuginterne Drucker gemäß Anspruch 1, wobei die Hostvorrichtung (50) ein Fahrzeugtelematiksystem (24) ist.

3. Der fahrzeuginterne Drucker gemäß Anspruch 1, wobei die Hostvorrichtung (50) ein tragbarer Computer (52) ist.

4. Der fahrzeuginterne Drucker gemäß einem der vorhergehenden Ansprüche, wobei die Sitzrückenlehne (62) einen Einlassschlitz (74) und einen Austrittsschlitz (76) umfasst und ein Druckmedium durch den Einlassschlitz (74) eingeführt werden kann, derart, dass sich das Druckmedium durch den Einlassschlitz (74) zu dem Drucker (20) und von dem Drucker (20) durch den Austrittsschlitz (76) bewegt.

5. Der fahrzeuginterne Drucker gemäß einem der vorhergehenden Ansprüche, wobei der Passagiersitz (60) eine Rückseite (68) aufweist und die Kammer (64) durch eine Zugangsklappe (66) an der Rückseite (68) zugänglich ist, wobei die Zugangsklappe (66) schwenkbar an der Sitzrückenlehne (62) befestigt ist, um eine geschlossene Position (70) und eine offene Position (72) zu definieren.

6. Der fahrzeuginterne Drucker gemäß Anspruch 5, der ferner eine Zuführablage (35) umfasst, die sich zwischen der Zugangsklappe (66) und dem Drucker (20) erstreckt, wenn sich die Zugangsklappe (66) in der geschlossenen Position (70) befindet.

7. Ein Verfahren zum Anzeigen von Informationen von einem Telematiksystem (24), wobei das Telematiksystem (24) in der Lage ist, Informationen von einem entfernten Ort drahtlos zu einem Fahrzeug (22) zu übertragen, wobei das Fahrzeug (22) ein Passagierabteil mit einer Mehrzahl von Passagiersitzen (60) darin aufweist, wobei jeder Passagiersitz (60) einen Sitzbereich aufweist, wobei das Verfahren zum Anzeigen von Informationen folgende Schritte aufweist:
Befestigen eines Druckers (2.0) in einer Kammer (64), die in einer Sitzrückenlehne (62) eines der Passagiersitze (60) angeordnet ist, derart, dass der Sitzbereich jedes Passagiersitzes in dem Fahrzeug nicht durch irgendeinen Teil des Druckers (20) blockiert wird;
wirksames Verbinden des Telematiksystems (24) mit dem Drucker (20);
Empfangen von Informationen durch das Telematiksystem (24) ;
Drucken der Informationen auf einem Druckmedium, das wirksam an dem fahrzeuginternen Drucker (20) befestigt ist.

8. Das Verfahren zum Anzeigen von Informationen in einem Fahrzeug gemäß Anspruch 7, das ferner den Schritt eines wirksamen Verbindens einer Hilfshostvorrichtung (50) mit dem Drucker (20) umfasst.

## Revendications

1. Imprimante embarquée dans un véhicule comprenant une imprimante (20) connectée de manière fonctionnelle à un dispositif hôte (50), ledit dispositif hôte (50) commandant l'imprimante (20), et un véhicule (22) équipé à l'intérieur d'un siège de passager (60), ledit siège de passager (60) disposant d'une zone d'assise de passager, d'un dossier de siège (62), et d'une chambre (64) pour recevoir ladite imprimante (20), ladite imprimante (20) étant fixée de manière fonctionnelle dans ladite chambre (64) de telle sorte que ladite imprimante (20) n'occupe aucune partie de ladite zone d'assise, **caractérisée en ce que** ladite chambre (64) se situe à l'intérieur dudit dossier de siège (62).

2. Imprimante embarquée dans un véhicule selon la revendication 1, dans laquelle ledit dispositif hôte (50) est un système télématique de véhicule (24).

3. Imprimante embarquée dans un véhicule selon la revendication 1, dans laquelle ledit dispositif hôte (50) est un ordinateur portable (52).

4. Imprimante embarquée dans un véhicule selon l'une quelconque des revendications précédentes, dans laquelle ledit dossier de siège (62) inclut une fente d'entrée (74) et une fente de sortie (76) et un support d'impression peut être inséré à travers ladite fente d'entrée (74) de telle sorte que ledit support d'impression se déplace à travers ladite fente d'entrée (74) vers ladite imprimante (20), et sorte de ladite imprimante (20) à travers ladite fente de sortie (76).

5. Imprimante embarquée dans un véhicule selon l'une quelconque des revendications précédentes, dans laquelle ledit siège de passager (60) possède un côté arrière (68) et ladite chambre (64) est accessible par l'intermédiaire d'une porte d'accès (66) dudit côté arrière (68), ladite porte d'accès (66) étant fixée de manière pivotante sur ledit dossier de siège (62) pour définir une position fermée (70) et une position ouverte (72).

6. Imprimante embarquée dans un véhicule selon la revendication 5, comprenant de plus un plateau d'alimentation (35) qui s'étend entre ladite porte d'accès (66) et ladite imprimante (20) lorsque ladite porte d'accès (66) se trouve dans ladite position fermée (70).

7. Procédé pour afficher des informations en provenance d'un système télématique (24), le système télématique (24) étant capable de transmettre d'une manière sans fil des informations à partir d'un site distant vers un véhicule (22), le véhicule (22) disposant d'un habitacle de passagers avec une pluralité de sièges de passagers (60) à l'intérieur, chaque dit siège de passager (60) présentant une zone d'assise, ledit procédé pour afficher des informations comprenant les étapes consistant à :
fixer une imprimante (20) à l'intérieur d'une chambre (64) située à l'intérieur d'un dossier de siège (62) de l'un desdits sièges de passagers (60) de telle sorte que la zone d'assise de chaque siège de passager à l'intérieur du véhicule ne soit pas bloquée par une partie quelconque de l'imprimante (20) ;
connecter de manière fonctionnelle le système télématique (24) à l'imprimante (20) ; recevoir des informations par l'intermédiaire du système télématique (24) ;
imprimer les informations sur un support d'impression fixé de manière fonctionnelle à l'imprimante embarquée dans un véhicule (20).

8. Procédé pour afficher des informations dans un véhicule selon la revendication 7, comprenant de plus l'étape consistant à connecter de manière fonctionnelle un dispositif hôte auxiliaire (50) à l'imprimante (20).
